# EUROPÄISCHE PATENTSCHRIFT

(11) **EP 2 659 238 B1**
(45) Veröffentlichungstag und Bekanntmachung des Hinweises auf die Patenterteilung: **01.04.2020**
(21) Anmeldenummer: 11802303.5
(22) Anmeldetag: 01.12.2011
(51) Int. Cl.: G01F 25/00, G01F 23/00, G01F 23/284, G01F 23/296

(54) **VORRICHTUNG ZUM AUSRICHTEN EINES MESSGERÄTES**
APPARATUS FOR ORIENTING A MEASURING INSTRUMENT
DISPOSITIF POUR ALIGNER UN APPAREIL DE MESURE

(30) Priorität: 30.12.2010 DE 102010064394
(43) Veröffentlichungstag der Anmeldung: 06.11.2013
(73) Patentinhaber: Endress+Hauser SE+Co. KG, 79689 Maulburg (DE)
(72) Erfinder: FABER, Harald, 79514 Lörrach (DE); MARKONI, Steffen, 79618 Rheinfelden (DE); FERRARO, Franco, 79739 Schwörstadt (DE)
(74) Vertreter: Andres, Angelika Maria
(86) Internationale Anmeldenummer: PCT/EP2011/071465
(87) Internationale Veröffentlichungsnummer: WO 2012/089438

(56) Entgegenhaltungen:
- DE-A1-102004 041 857
- US-A1- 2008 100 501

## Beschreibung

Die vorliegende Erfindung betrifft ein Messgerät zur Bestimmung und/oder Überwachung des Grenzstands oder Füllstands eines Mediums in einem Behälter bestehend aus zumindest einer Sensoreinheit und einer Messumformereinheit.

Von der Anmelderin werden auch Messgeräte unter der Bezeichnung Micropilot oder Prosonic produziert und vertrieben, welche nach dem Laufzeit-Messverfahren arbeiten und dazu dienen, einen Füllstand eines Mediums in einem Behälter zu bestimmen und/oder zu überwachen. Bei der Laufzeit-Messmethode werden beispielsweise Ultraschallwellen über einen Schallwandler oder Mikrowellen bzw. Radarwellen über eine Antenne ausgesendet und die an der Mediumsoberfläche reflektierten Echowellen werden nach der abstandsabhängigen Laufzeit des Signals wieder empfangen. Aus der Laufzeit lässt sich mit Hilfe der bekannten Ausbreitungsgeschwindigkeit der Füllstand des Mediums in einem Behälter berechnen. Die Echokurve stellt hierbei die empfangene Signalamplitude als Funktion der Zeit bzw. der Laufstrecke dar, wobei jeder Messwert der Echokurve der Amplitude eines in einem bestimmten Abstand an einer Oberfläche reflektierten Messsignals entspricht.

Aufgrund der Messmethode nach dem Reflexionsprinzip hängt bei Messgeräten, die nach dem Laufzeit-Messverfahren arbeiten, die Güte des Messsignals bzw. der Echokurve stark von der Einbauposition ab. Zum Beispiel haben
- die Reflektionseigenschaften des Mediums,
- baulich bedingte Störelemente im Abstrahlkegel des Sendeelementes,
- Schüttkegelbildung,
- Einfüllvorrichtungen und Rührwerke im Behälter und
- die Ansatzbildung des Mediums an der Sensoreinheit
einen starken Einfluss auf die Zuverlässigkeit und Verfügbarkeit der Messgeräte und der von ihnen ermittelten Messwerte. Die Auswirkungen dieser Einflussfaktoren auf das Messsignal können durch einen optimierten Einbau der Sensoreinheit minimiert werden. Bei so genannten Laufzeitmessverfahren bzw. dem "Time of Flight"- Messverfahren, wie z.B. der freistrahlenden Mikrowellen- und der Ultraschall-Messtechnik, ist es für eine optimale Mess-Performance wichtig, die Messsituation mit Hilfe der Einbauposition der Antenne bzw. des Schallwandlers zu optimieren.

Nach heutigem Stand der Technik muss das Bedienpersonal zum optimalen Ausrichten der Antenne bzw. des Schallwandlers die Position der Sensoreinheit schrittweise ändern und sich eine auf dem Display angezeigte Kenngröße (z.B. die Intensität der Amplitude der Füllstandsechos in dB) mit der zugehörigen eingestellten Antennen- bzw. Schallwandlerposition merken, um eine Bewertung der Messsituation im Tankbehälter vornehmen zu können. Jedoch erlaubt die bekannte Kenngröße keine umfassende Aussage über die Ausrichtung bzw. Einbausituation einer Antenne oder eines Schallwandlers in einem Behälter, meist nur die Intensität der Amplitude des Füllstandsechos, beachtet werden kann.

Des Weiteren ist es nach heutigem Stand der Technik möglich, die Echofunktion in Abhängigkeit von der Zeit auf dem Display des Messgerätes oder einem vernetzten Service-Tool darzustellen und somit die aktuelle Messsituation bei aktueller Position der Sensoreinheit zu ermitteln. Eine solche Vorrichtung zur Visualisierung einer Echokurve oder von Historiendaten auf einer Anzeigeeinheit ist aus der Patentanmeldung DE 100 52 836 A1 bekannt. Der Nachteil dieser Vorrichtung ist, dass es nicht möglich ist, die Messsignale unter verschiedenen Einbausituationen des Messgerätes visuell miteinander zu vergleichen und die Darstellung aufgrund der großen Datenmengen sehr langsam ist.

Eine Vorrichtung zum Verändern der Einbauposition durch eine mechanische Ausrichtvorrichtung eines Füllstandsmessgeräts ist aus der Patentanmeldung DE 101 06 176 A1 bekannt. Ein ausrichtbares, Radar-basiertes Füllstandsmessgerät ist außerdem in der Veröffentlichungsschrift DE 10 2004 041 857 A1 beschrieben. Dort wird das Füllstandsmessgerät auf Basis der Echokurve ausgerichtet, wobei mittels eines Neigungssensors derjenige Winkel bestimmt werden kann, bei dem gemäß der Echokurve die größte Reflektion auftritt.

Ferner ist eine Vorrichtung zur Veränderung der Abstrahlcharakteristik einer Planarantenne aus der Patentanmeldung DE 101 49 851 A1 bekannt. Eine Vorrichtung zum Erkennen einer fehlerhaften Einbausituation eines Durchflussmessgerätes in einem Messaufbau ist aus der Patentanmeldung DE 102 30 607 A1 bekannt. In dieser Offenlegungsschrift wird eine Vorrichtung vorgestellt, die die fehlerhafte Einbausituation eines Vortex - Durchflussmesseinrichtung erkennt und diese Fehlermeldung an ein Leitsystem weiterleitet. Der Nachteil dieser Beispiele einer Ausrichtvorrichtung ist, dass das Bedienpersonal zur Einstellung oder Ausrichtung des Messgerätes großes Fachwissen bzw. Know-how braucht.

Desweiteren werden von der Anmelderin Messgeräte unter dem Namen Liquiphant oder Soliphant Messgeräte produziert und vertrieben, welchen den Grenzstand eines Mediums in einem Behälter mittels der Änderung des Vibrationsverhaltens eines Schwingelementes, insbesondere eine Schwinggabel, ermitteln.

Im Stand der Technik sind zur Bestimmung des Grenzstands bzw. Füllstands und weiterer Prozessgrößen eines Mediums so genannte Schwinggabeln (z.B. EP 0 444 173 B1), Einstäbe (z.B. WO 2004/094964 A1) oder auch Membranschwinger als Schwingelemente bekannt. Ausgenutzt wird bei den jeweiligen Messungen, dass die Kenngrößen der mechanischen Schwingungen (Schwingungsamplitude, Resonanzfrequenz, Phasengang über Frequenz) der schwingfähigen Einheit vom Kontakt mit dem Medium und auch von dessen Eigenschaften abhängen. So nimmt beispielsweise die Frequenz oder die Amplitude der Schwingungen ab, wenn insbesondere das flüssige Medium die schwingfähige Einheit erreicht und zumindest teilweise bedeckt. Das flüssige Medium wirkt auf den schwingenden Körper des Sensors - d.h. z.B. auf die Schwinggabel bzw. den Einstab bzw. die Membran - einerseits als mitbewegte Masse, weshalb die Schwingfrequenz sinkt, und andererseits als mechanischer Dämpfer, weshalb die Schwingungsamplitude abnimmt. Daher lässt sich aus der Abnahme der Schwingungsfrequenz bzw. der Amplitude darauf schließen, dass das Medium einen von der Ausgestaltung und der Position der Anbringung der Vorrichtung abhängigen Füllstand erreicht hat. Weiterhin ist die Schwingungsfrequenz auch beispielsweise von der Viskosität des Mediums abhängig (siehe z.B. EP 1 325 301).

Zur Anregung der jeweiligen mechanisch schwingfähigen Einheiten werden oft piezoelektrische Elemente verwendet, welche umgekehrt auch die mechanischen Schwingungen in elektrische Signale umwandeln. Weiterhin ist für bestimmte Anwendungen auch eine elektromagnetische Anregung der schwingfähigen Einheit möglich.

Im Stand der Technik gibt es Ansätze, die Sensoreinheiten einer Selbstüberwachung zu unterziehen, d.h. zu testen, ob der Sensor bzw. einzelne Bestandteile des Sensors in Ordnung sind. Eine Problematik besteht dabei darin, dass insbesondere die Funktionsfähigkeit der schwingfähigen Einheit, d.h. dem Bestandteil, welches mit dem Medium in Kontakt tritt und somit den größten Belastungen ausgesetzt ist, in den bekannten Messverfahren nicht überprüft wird. Jedoch ist es für die exakte Messung notwendig die Einbauposition der Sensoreinheit sicher zu stellen.

Der Erfindung liegt die Aufgabe zugrunde, eine Vorrichtung zur Ermittlung und Überwachung der optimierten Ausrichtung des Messgerätes aufzuzeigen.

Gelöst wird diese Aufgabe durch einen Vorrichtung gemäß Anspruch 1.

Weitere Ausgestaltungen sind in den Unteransprüchen 2 - 7 ausgeführt.

Die Erfindung wird anhand der nachfolgenden Zeichnungen näher erläutert. Zur Vereinfachung sind in den Zeichnungen identische Teile mit dem gleichen Bezugszeichen versehen worden. Es zeigt:
- Fig. 1: ein Ausführungsbeispiel des erfindungsgemäßen Messgerätes am Behälter, und
- Fig. 2: ein Ausführungsbeispiel des erfindungsgemäßen Messumformereinheit des Messgerätes.

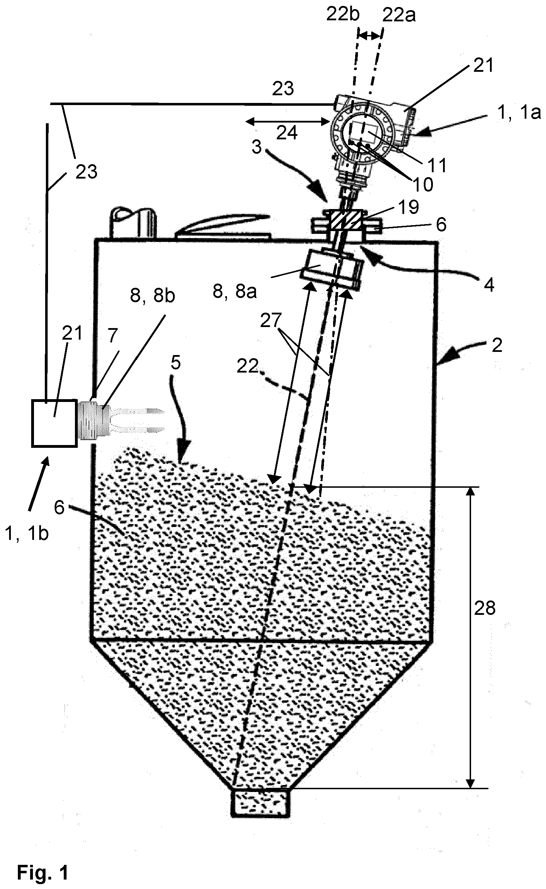

In Fig. 1 ist auf einem Behälter 2 in einem Stutzen 4 ein Messgerät 1a montiert, das nach dem Laufzeit-Messverfahren den Füllstand 28 eines Mediums 5 bzw. Füllguts 5 im Behälter 2 ermittelt.

Das Messgerät 1, 1a wird in den meisten Anwendungen über einen Flansch 6 in einem Stutzen 4 am Behälter 2 befestigt. Es besteht aber auch die Möglichkeit, das Messgerät 1, 1b über eine Einschraubung 7 am Behälter 2 zu befestigen. In der Fig. 1 ist die Möglichkeit einer mechanischen Ausrichtung der Sensoreinheit 8 über eine mechanische Ausrichtvorrichtung 3 als druck- und gasdichtes Kugelgelenk aufgezeigt, jedoch sind auch andere Ausrichtvorrichtungen 3, wie z.B. Drehkeilflansche, usw. als Ausrichtvorrichtung 3 einsetzbar.

In der Darstellung ist ein Messgerät 1 aufgezeigt, das sich grundsätzlich aus einer Sensoreinheit 8, die sich im Behälter 2 befindet und einer Messumformereinheit 21 die sich in einem Gehäuse außerhalb des geschlossenen Behälters 2 zusammensetzt. Diese Sensoreinheit 8 und hier speziell ein Schallwandler 8a ist über einen Stutzen 4 in den Behälter 2 eingebracht und durch einen beidseitigen Flansch 6 am Behälter 2 befestigt. Eine mechanische Ausrichtvorrichtung 3 ist in dem Bereich, in dem das Messgerät 1a am Behälter 2 befestigt ist, ausgebildet, welche über einen Antrieb 19 automatisiert verstellt werden kann. Das Messgerät 1a besitzt einen Versorgungsleitung 24 und einen Feldbus 23. In der Messumformereinheit 21 ist ein Neigungssensor 14 integriert, der einen Ausrichtungsmesswert 15 ermittelt. Dieser ermittelte Ausrichtungsmesswert 15 werden auf der Anzeigeeinheit 9 des Messgerätes 1, 1a, 1b visuelle oder akustisch zur Anzeige gebracht, und über die Eingabeeinheit 10 wird die Bedienung des Messgerätes 1, 1a, 1b vorgenommen werden.

Das Messgerät 1, 1a, 1b bzw. die Sensoreinheit 8 wird mit der mechanischen Ausrichtvorrichtung 3 über einen Antrieb 19 von der ersten Einbauposition 22a in die zweite Einbauposition 22b verstellt. Die Änderung der Neigung des Messgeräts 1 wird über den integrierten Neigungssensor 14 ermittelt und als Ausrichtungsmesswert 15 beispielsweise auf einem Display als Anzeigeeinheit 9 visuell dargestellt. Desweiteren ist es möglich, dass die Ausrichtung des Messgeräts 1, 1a, 1b anhand der Tonhöhe eines akustischen Tonsignals von der Anzeigeeinheit 9 dem Bediener signalisiert wird. Bei dieser Ausgestaltung ist es notwendig, dass ein Tongeber in der Anzeigeeinheit 9 vorhanden ist.

Die Energieversorgung des Messgerätes 1 selbst erfolgt über eine Versorgungsleitung 24, und die Kommunikation mit einer entfernten Leitstelle oder mit anderen Messgeräten 1 wird über einen Feldbus 23, der alle bekannten Kommunikationsstandards, wie z.B. PROFIBUS-PA oder FOUNDATION FIELDBUS, unterstützt, erreicht. Insbesondere ist vorgesehen, das Messgerät 1 über den Feldbus 23 mit der nötigen Energie zu versorgen. Hierzu ist das Messgerät 1 bevorzugt nach den Standards und Vorschriften als ein 4-20 mA Zweileiter-Messgerät ausgelegt. Durch die Kommunikationsanbindung des Inbetriebnahmegerätes 8 bzw. des Messgerätes 1 über einen Feldbus 23 an eine entfernte Leitstelle ist auch ein automatisierter Ausrichtvorgang des Messgerätes 1, der von der Leitstelle aus gestartet und bewertet wird, möglich.

Zur Funktionsweise des Füllstandsmessgerätes 1a ist folgendes zu sagen: Vom Messgerät 1 bzw. von der Sensoreinheit 8 wird ein breitbandiges Mikrowellen- oder Ultraschall-Impulssignal 27 in den Messraum bzw. in den Behälter 2 ausgesendet. An den im Strahlungskegel der Sensoreinheit 8 befindlichen Oberflächen von Objekten, z.B. Störelemente 23 oder Füllgut 5, werden die Wellen 27 nach dem Reflexionsgesetz im gleichen Winkel zum Lot der Oberfläche wieder reflektiert. Dadurch wird an jeder Oberfläche, die im Abstrahlungskegel der Sensoreinheit 8 liegt, abhängig vom Auftreffwinkel und vom Material des Reflektors ein Reflektionssignal 27 in die Sensoreinheit 8 zurückreflektiert. Aus der Laufzeit des von der Oberfläche des Füllguts 5 zurückreflektierten Messsignals 27 wird der Füllstand 28 des Füllguts 5 berechnet. Die Ausrichtung der Sensoreinheit 8 eine Füllstandsmessgeräts 1a ist übrigens auch beim FMCW - Verfahren notwendig und wird auch dort durchgeführt.

Über eine Auswahlfunktion in der Bedienerführung des Messgerätes 1 oder bei der erstmaligen Inbetriebnahme schaltet sich das Messgerät 1 in den Betriebsmodus, indem die Ausrichtung der Sensoreinheit 8 ermöglicht wird.

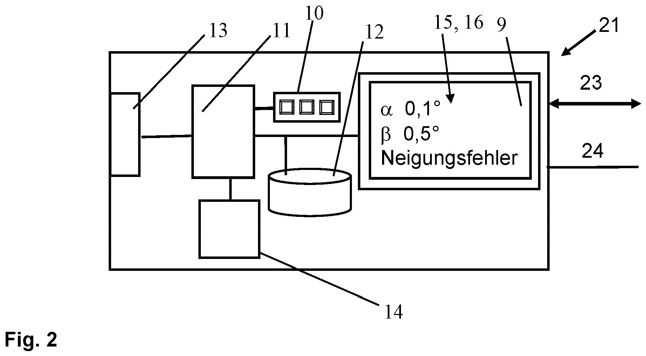

Fig. 2 zeigt eine schematische Darstellung des Inbetriebnahmemodus am Messgerät 1, 1a, 1b. Das Messgerät 1, 1a, 1b beinhaltet beispielsweise eine Anzeigeeinheit 9, über welche der Ausrichtungsmesswert 15 oder gegebenenfalls Fehlermeldungen 16 angezeigt werden und eine Eingabeeinheit 10, die zur Bedienung des Messgeräts 1, 1a, 1b und der über die Kommunikationseinheit 13 verbundenen Leitstelle verwendet wird. Die Ausrichtungsmesswerte 15 des Neigungssensors 14 werden in der Datenverarbeitungseinheit 11 verarbeitet und in der Speichereinheit 12 abgelegt. Über die Datenschnittstelle 13 und über die Datenleitung 23 kommuniziert das Messgerät 1, 1a, 1b mit anderen Messgeräten 1 und der Leistelle. Die Kommunikation zwischen dem Messgerät 1, 1a, 1b und der Leitstelle kann gleichfalls mit der Energieversorgung des Messgeräts 1, 1a, 1b über die gleiche Datenleitung 23, 24 in einer Zweileiter- oder Vierleitertechnik erfolgen. Möglich ist außerdem eine kabellose Kommunikation über Funk. Die Anzeigeeinheit 9, die Eingabeeinheit 10, die Datenverarbeitungseinheit 13, der Positionssensor 14 und/oder die Speichereinheit 12 können sich sowohl in dem Sensoreinheit 8 oder in der Messumformereinheit 21 des Messgerät 1 befinden, als auch in beiden gleichzeitig integriert sein.

Für eine hohe Messgenauigkeit ist ein entsprechend hoher Signal-zu-Rausch-Abstand Voraussetzung, der bei der Sensoreinheit 8 als Radarantenne durch einen hohen Antennengewinn erzielt wird. Damit geht immer eine entsprechende Strahlbündelung einher, damit Störelemente wie z.B. die Tankwand nicht von der Strahlungskeule erfasst werden. Beispielsweise beträgt der Öffnungswinkel bei der Parabolantenne bei 26GHz ungefähr 5°. Der große Nachteil dieser stark bündelnden Antennen als Sensoreinheit 8 ist eine hohe Empfindlichkeit bezüglich ihrer Ausrichtung auf die Oberfläche des Mediums 5. Nur wenige Grad Abweichung von der Senkrechten führen zu erheblichen Signalverlusten.

Wie schon beschrieben, kann alternativ die Sensoreinheit 8 als Antenne auch auf ihre maximale Signalamplitude ausgerichtet werden. Dabei ist aber die Datenübertragung zu den Servicetools zu langsam und die Reaktion auf eine Neigungsänderung so stark verzögert, dass diese Einstellmöglichkeit praktisch nicht zu gebrauchen ist.

Zukünftige RADAR-Füllstandsmessgeräte 1, 1a werden voraussichtlich mit Frequenzen bis zu 80 GHz arbeiten wodurch noch höhere Bündelung des Strahlungsprofils der Antenne erreicht werden. Jedoch ist es hierbei die exakte Ausrichtung des Messgeräts 1, 1a unbedingt notwendig um Störeinflüsse zu vermeiden.

Der Neigungssensor 14 kann darüber hinaus auch in der Betriebsphase des Messgeräts 1 dessen Ausrichtung überwachen und erkennen, ob das Messgerät 1 nicht exakt ausgerichtet ist, um eine hochgenaue Messung zu ermöglichen. Ursachen für eine Neigungsänderung des Messgeräts 1 kann beispielsweise witterungsbedingt durch Wind und Schnee oder Umbauten an der Anlage erfolgen.

Als Neigungssensor 14 wird beispielsweise ein 3-Achseninklinometer an beliebiger Stelle im Messgerät 1 platziert oder eingebaut, vorzugsweise auf einer der Leiterplatten in der Messumformereinheit 18. Das Messgerät 1 muss dann einmal in die richtige Lage, d.h. in die Senkrechte, gebracht werden um die Werte der Neigungssensoren 14 zu erfassen und als Ausrichtungsmesswert 15 in einer Speichereinheit 12 zu speichern Elektronische Wasserwaagen bzw. Neigungssensoren 14 bzw. Inklinometer werden als mikromechanische Bauteile (MEMS) hergestellt und können wie elektronische Bauteile verarbeitet werden.

In der Speichereinheit 12 der Messumformereinheit 18 sind Grenzwerte 20 für den Ausrichtungsmesswert 15 abgelegt, so dass das Messgerät 1 bei einem ermittelten Ausrichtungsmesswert 15 außerhalb des Bereichs dieser Grenzwerte 20 eine Fehlermeldung 16 ausgibt.

Beispielsweise ist es möglich, dass das Messgerät 1,1b entsprechend seiner Einbaulage bzw. Ausrichtung entsprechend automatisch konfiguriert wird. Bei einem Grenzstandmessgerät 1b mit einem Schwingungselement 8b ist es wichtig, welche Ausrichtung und Position die Gabelzinken der Schwinggabel als Schwingelement 8b besitzen, damit eine exakte Messung erfolgen kann und die Funktionstüchtigkeit und Verfügbarkeit des Messgeräts 1, 1b entsprechend gewährleistet werden kann. Desweiteren kann über die Ermittlung der exakten Ausrichtung des Messgeräts 1, 1b ein Plausibilitätstest der Messwerte und der Konfiguration des Messgeräts 1, 1b erfolgen.

### Bezugszeichenliste

- 1: Messgerät
- 1a: Füllstandsmessgerät
- 1b: Grenzstandmessgerät
- 2: Behälter
- 3: Ausrichtvorrichtung
- 4: Stutzen
- 5: Füllgut bzw. Medium
- 6: Flansch
- 7: Einschraubung
- 8: Sensoreinheit
- 8a: Ultraschallsensor
- 8b: Schwingeinheit
- 9: Anzeigeeinheit
- 10: Eingabeeinheit
- 11: Datenverarbeitungseinheit
- 12: Speichereinheit
- 13: Kommunikationseinheit
- 14: Neigungssensor, Positionssensor
- 15: Ausrichtungsmesswert
- 16: Fehlermeldung
- 17: Störecho, Störsignale
- 18: Messumformereinheit
- 19: Antrieb
- 20: Grenzwert
- 21:
- 22: Einbauposition
- 22a: Erste Einbauposition
- 22b: Zweite Einbauposition
- 23: Feldbus
- 24: Versorgungsleitung
- 27: Messsignal
- 28: Füllstand

## Patentansprüche

1. Messgeräts zur Bestimmung und/oder Überwachung des Grenzstands oder Füllstands (18) eines Mediums in einem Behälter (2) bestehend aus zumindest einer Sensoreinheit (8) und einer Messumformereinheit (21),
wobei zumindest ein Neigungssensor (14) in dem Messgerät (1) integriert ist, der die Ausrichtung des Messgeräts (1) und/oder der Sensoreinheit (8) an dem Behälter (2) ermittelt,
wobei der Neigungssensor (14) dermaßen ausgestaltet ist, dass die Ausrichtung des Messgeräts (1) und/oder der Sensoreinheit (8) als zumindest ein Ausrichtungsmesswert (15) in der Betriebsphase des Messgeräts (1) ständig überwacht wird,
**dadurch gekennzeichnet,**
**dass** die Messumformereinheit (21) eine Speichereinheit (12) aufweist, in der Grenzwerte für den Ausrichtungsmesswert (15) abgelegt sind und
**dass** das Messgerät (1) eingerichtet ist, bei einem ermittelten Ausrichtungsmesswert (15) außerhalb des Bereichs dieser Grenzwerte eine Fehlermeldung (16) auszugeben.

2. Vorrichtung nach Anspruch 1,
**dadurch gekennzeichnet,**
**dass** der Neigungssensor (14) in der Sensoreinheit (8) ausgestaltet ist.

3. Messgerät nach Anspruch 1,
**dadurch gekennzeichnet,**
**dass** der Neigungssensor (14) in der Messumformereinheit (21) integriert ist.

4. Messgerät nach zumindest einem der Ansprüche 1 bis 3,
**dadurch gekennzeichnet,**
**dass** der Neigungssensor (14) dermaßen ausgestaltet ist, dass die Ausrichtung des Messgeräts (1) und/oder der Sensoreinheit (8) als zumindest ein Ausrichtungsmesswert (15) bei der Inbetriebnahme des Messgeräts (1) ermittelt werden.

5. Messgerät nach zumindest einem der Ansprüche 1 oder 4,
**dadurch gekennzeichnet,**
**dass** eine in der Messumformereinheit (21) integrierte Anzeigeeinheit (9) eingerichtet ist, diesen Ausrichtungsmesswert (15) und/oder die Fehlermeldung (16) zur Ermittlung der Ausrichtung visuell oder akustisch anzuzeigen

6. Messgerät nach zumindest einem der Ansprüche 1 oder 4,
**dadurch gekennzeichnet,**
**dass** eine in der Messumformereinheit (21) integrierte Kommunikationseinheit (13) eingerichtet ist, diesen Ausrichtungsmesswert (15) und/oder die Fehlermeldung (16) über einen Feldbus (23) an eine entfernte Leitstelle zu übertragen.

7. Messgerät nach zumindest einem der vorhergehenden Ansprüche,
**dadurch gekennzeichnet,**
**dass** eine automatische Ausrichtvorrichtung (3) im Messgerät (1) integriert ist, dass ein Antrieb (19) vorgesehen ist, der eingerichtet ist, mittels der Ausrichtvorrichtung (3) die Einbauposition (22, 22a, 22b) des Messgerätes (1) und/oder der Sensoreinheit (8) automatisiert anzusteuern

## Claims

1. Measuring device for determining and/or monitoring the point level or level (18) of a medium in a container (2), consisting of at least a sensor unit (8) and a transmitter unit (21), wherein at least one tilt sensor (14) is integrated in the measuring device (1), said sensor determining the alignment of the measuring device (1) and/or the sensor unit (8) on the container (2),
wherein the tilt sensor (14) is designed in such a way that the alignment of the measuring device (1) and/or of the sensor unit (8) is constantly monitored as at least an alignment measured value (15) in the operating phase of the measuring device (1),
**characterized in that**
the transmitter unit (21) has a memory unit (12) in which limit values for the alignment measured value (15) are stored and
**in that** the measuring device (1) is designed to output an error message (16) if an alignment measured value (15) is determined that is outside the range of these limit values.

2. Apparatus as claimed in Claim 1,
**characterized in that**
the tilt sensor (14) is arranged in the sensor unit (8)

3. Apparatus as claimed in Claim 1,
**characterized in that**
the tilt sensor (14) is integrated in the transmitter unit (21).

4. Apparatus as claimed in at least one of the Claims 1 to 3,
**characterized in that**
the tilt sensor (14) is designed in such a way that the alignment of the measuring device (1) and/or of the sensor unit (8) are determined as at least an alignment measured value (15) during the commissioning of the measuring device (1).

5. Apparatus as claimed in at least one of the Claims 1 to 4,
**characterized in that**
a display unit (9), which is integrated in the transmitter unit (21), is configured to indicate this alignment measured value (15) and/or the error message (16) visually or acoustically for the purpose of determining the alignment.

6. Apparatus as claimed in at least one of the Claims 1 to 4,
**characterized in that**
a communication unit (13), which is integrated in the transmitter unit (21), is configured to communicate this alignment measured value (15) and/or the error message (16) via a fieldbus (23) to a remote control station.

7. Measuring device as claimed in at least one of the previous claims,
**characterized in that**
an automated alignment apparatus (3) is integrated in the measuring device (1), **in that** a drive (19) is provided that is designed to automatically control the installation position (22, 22a, 22b) of the measuring device (1) and/or of the sensor unit (8) using the alignment apparatus (3).

## Revendications

1. Appareil de mesure destiné à la détermination et/ou à la surveillance du seuil de niveau ou du niveau de remplissage (18) d'un produit dans un réservoir (2), lequel appareil est constitué au moins d'une unité de capteur (8) et d'une unité de transmetteur (21), au moins un capteur d'inclinaison (14) étant intégré dans l'appareil de mesure (1), lequel capteur détermine l'alignement de l'appareil de mesure (1) et/ou de l'unité de capteur (8) sur le réservoir (2),
le capteur d'inclinaison (14) étant conçu de telle sorte à surveiller en permanence l'alignement de l'appareil de mesure (1) et/ou de l'unité de capteur (8) en tant qu'au moins une valeur mesurée d'alignement (15) dans la phase de fonctionnement de l'appareil de mesure (1),
**caractérisé**
**en ce que** l'unité de transmetteur (21) comprend une unité de mémoire (12), dans laquelle sont enregistrées des valeurs limites pour la valeur mesurée d'alignement (15) et
**en ce que** l'appareil de mesure (1) est conçu de telle sorte à émettre un message d'erreur (16) dans le cas où une valeur mesurée d'alignement (15) déterminée est en dehors de la plage de ces valeurs limites.

2. Dispositif selon la revendication 1,
**caractérisé**
**en ce que** le capteur d'inclinaison (14) est formé dans l'unité de capteur (8)

3. Dispositif selon la revendication 1,
**caractérisé**
**en ce que** le capteur d'inclinaison (14) est intégré dans l'unité de transmetteur (21).

4. Dispositif selon au moins l'une des revendications 1 à 3,
**caractérisé**
**en ce que** le capteur d'inclinaison (14) est conçu de telle sorte à déterminer l'alignement de l'appareil de mesure (1) et/ou de l'unité de capteur (8) sur la base d'au moins une valeur mesurée d'alignement (15) lors de la mise en service de l'appareil de mesure (1).

5. Dispositif selon au moins l'une des revendications 1 à 4,
**caractérisé**
**en ce qu'**une unité d'affichage (9), intégrée dans l'unité de transmetteur (21), est conçue de telle sorte à afficher, de manière visuelle ou acoustique, cette valeur mesurée d'alignement (15) et/ou le message d'erreur (16) en vue de la détermination de l'alignement.

6. Dispositif selon au moins l'une des revendications 1 à 4,
**caractérisé**
**en ce qu'**une unité de communication (13), intégrée dans l'unité de transmetteur (21), est conçue de telle sorte à transmettre cette valeur mesurée d'alignement (15) et/ou le message d'erreur (16) par l'intermédiaire d'un bus de terrain (23) à un système numérique de contrôle commande déporté.

7. Appareil de mesure selon au moins l'une des revendications précédentes,
**caractérisé**
**en ce qu'**est intégré dans l'appareil de mesure (1) un dispositif d'alignement automatique (3),
**en ce qu'**est prévu un entraînement (19), lequel est conçu de telle sorte à commander de façon automatisée, au moyen du dispositif d'alignement (3), la position de montage (22, 22a, 22b) de l'appareil de mesure (1) et/ou de l'unité de capteur (8).
